Europäisches Patentamt

(19) European Patent Office

Office européen des brevets

(11) Publication number: **0 448 361 A1**

## (12) EUROPEAN PATENT APPLICATION

(21) Application number: **91302381.8**

(22) Date of filing: **19.03.91**

(51) Int. Cl.⁵: **F16L 15/04, F16B 39/34**

(30) Priority: **19.03.90 EP 90302920**

(43) Date of publication of application:
**25.09.91 Bulletin 91/39**

(84) Designated Contracting States:
**DE FR GB IT**

(71) Applicant: **JOHN GUEST ENGINEERING LIMITED**
**Horton Road**
**West Drayton Middlesex UB7 8HP (GB)**

(72) Inventor: **Guest, John Derek**
**Cannon Hill Way Bray Maidenhead**
**Berkshire (GB)**

(74) Representative: **Bayliss, Geoffrey Cyril et al**
**BOULT, WADE & TENNANT 27 Furnival Street**
**London EC4A 1PQ (GB)**

(54) Improvements in or relating to threaded members.

(57) The disclosure relates to a male threaded plug (10) having a screw thread (11) to engage in a corresponding threaded socket. The threaded plug is formed from a relatively hard plastics material and strips of a relatively soft plastics material are moulded onto the thread extending in the lengthwise direction of the plug at spaced locations around the plug so as to engage in the threads of the plug but not to project significantly above the outer periphery of the plug. Thus the threaded plug can readily be engaged in the threaded socket and engagement of the thread deforms or distorts the supplemental strips of material to cause the supplemental material to fill any voids between the threads of plug and socket and thereby form a seal between the threads. The arrangement is equally applicable to other forms of screw threaded members.

EP 0 448 361 A1

# FIG. 1.

# IMPROVEMENTS IN OR RELATING TO THREADED MEMBERS

This invention relates to screw threaded members for engagement with screw threaded elements and is particularly, although not exclusively applicable to the connection of a threaded member to a threaded element in a fluid coupling.

This invention provides a threaded member for engaging with a corresponding threaded element in which the threaded member has supplemental material on a portion or portions of the thread so as not to project significantly above the outer periphery of the thread to allow the threaded member to be engaged with a correspondingly threaded element, engagement of the thread deforming or distorting the supplemental material to fill any void between the threads of the member and element and thereby form a seal between the threads.

Preferably the threaded member is formed as a moulding and the supplemental material is moulded onto the threaded member in a subsequent moulding operation.

The threaded member may be formed in a relatively hard material and the supplemental material is relatively soft to allow the material to deform or distort when the threaded member is engaged with said threaded element.

More specifically the threaded member may be formed in a relative hard plastics material and the supplemental material in a relatively soft rubber like or plastics material.

In any of the above arrangements the supplemental material may comprise a plurality of bars of material formed on the threaded member at the spaced locations around the member each bar bridging a plurality of threads.

In an alternative arrangement the supplemental material may comprise a ring of material formed around a portion of the thread member.

The supplemental material may be spaced part way along the thread away from both ends of the thread.

In any of the above arrangements the threaded member may be a male threaded member intended to engage a female threaded element.

In one example of the invention the threaded member may be a threaded plug to engage in a screw threaded socket.

The following is a description of some specific embodiments of the invention, reference being made to the accompanying drawings in which;

Figure 1 is a diagramatic view of a threaded plug prior to screwing into a screw threaded socket:

Figure 2 is a similar view to that of Figure 1 showing the plug after screwing into the socket; and

Figure 3 shows a further form of male threaded plug; and

Figure 4 shows yet a further arrangement.

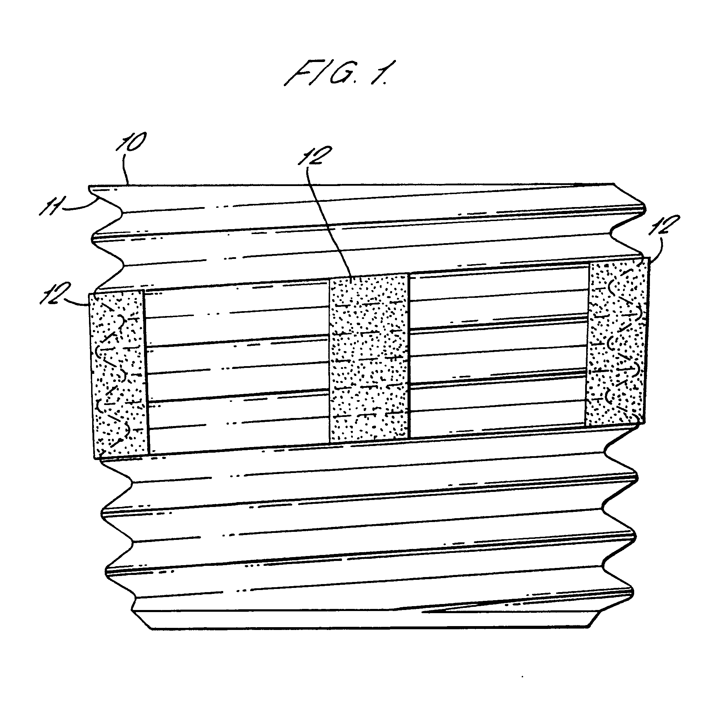

Referring firstly to Figure 1 of the drawings, there is shown a male plug 10 having an external thread 11 of conventional form with four spaced bars 12 at spaced locations around the plug and extending lengthwise across four threads. The plug 10 is moulded in a plastics material using, for example, an injection moulding process in a single or two stage operation or may be cast in a suitable metal or machined on a lathe using C.N.C. control. The plug is intended to be secured in an internally screw threaded socket which is not shown. The socket may for example, comprise a brass housing having a screw threaded bore to receive the plug.

The bars extend generally lengthwise of the plug and each bridges four turns of the thread 11. The bars fill the gaps between adjacent threads and stand just proud of the outer peripheries of the thread. In the example shown, the bars are located part way along the threaded plug to leave clear threaded lengths of the plug to beyond the ends of the bars.

When the plug is screwed into the threaded socket such as a brass housing, the plain section of the plug screws into the socket as normal. When the bars reach the thread in the socket an increased torque is required from the plug to continue screwing the plug into the socket. As the bars are forced between the threads of the respective plug and socket, the material of the bars 12 is deformed or distorted and fills any gap between the respective threads to provide a seal between the threaded elements to prevent the escape of fluid under pressure from within the socket along the threads.

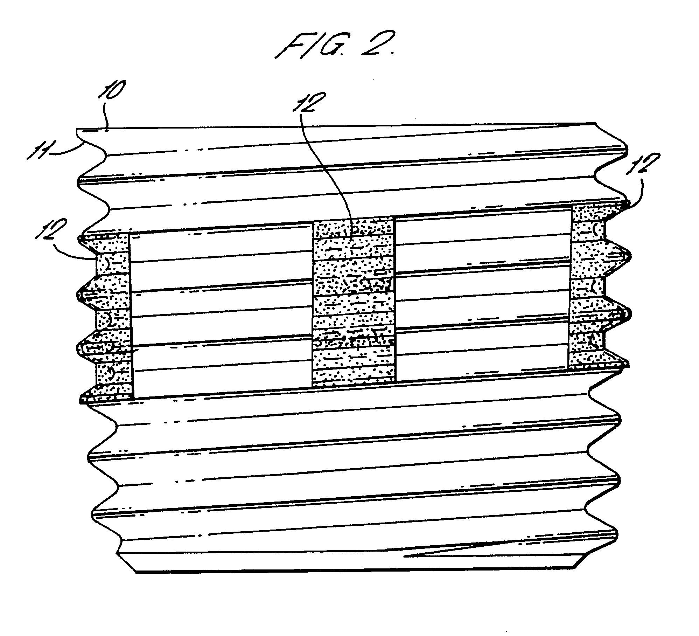

When the plug is subsequently unscrewed from the socket, the deformation of the threaded material into the bottom regions of the threads can be seen as in Figure 2.

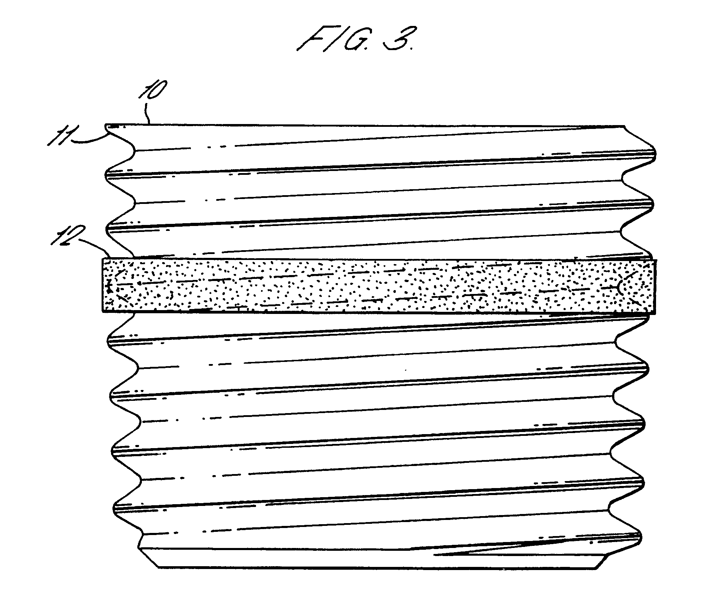

Figure 3 of the drawings shows an alternative arrangement for applying supplemental material to the threaded member in the form of a ring bridging one or more turns of the thread at a location spaced from either end thereof. The arrangement otherwise ends in a similar manner to that described above with reference to Figures 1 and 2.

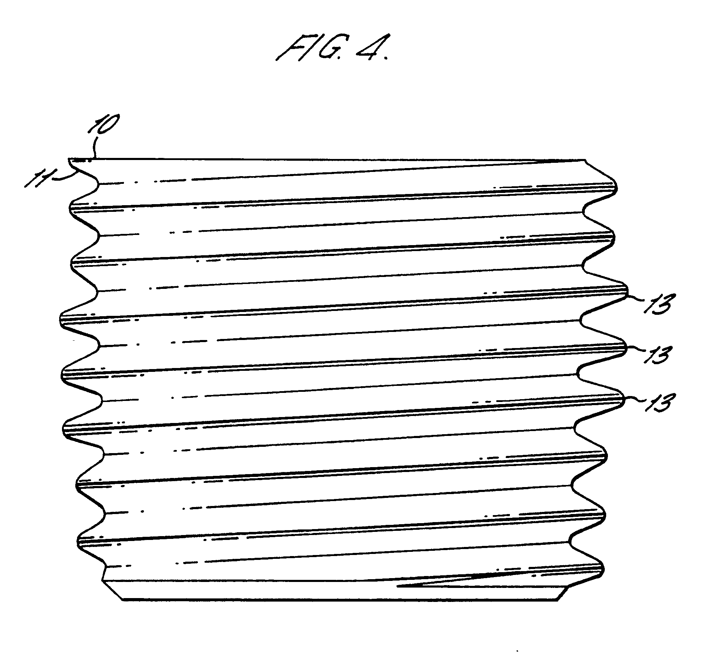

Figure 4 of the drawings shows a further arrangement on which the diameter of the thread at 13 is increased by, say, 2 to 3 thousandths of an inch over one or two turns to provide the requisite additional material.

It will be appreciated that the invention is equally applicable to both parallel and tapered threaded members. In the case of a plastics plug the threaded member with its additional material applied to the thread may be conveniently formed utilising an injection moulding process in which the plug and bars are formed in the same material in a single moulding operation or the injection mould tool may be adapted to allow initial moulding of plain/threaded plug and then a subsequent moulding operation in which the supplemental material in the form of bars or a ring is then applied to the moulded plug in part of the same basic cycle of the injection moulding machine. The latter method lends itself to forming the plug in a relatively hard plastics material and then forming the bars, ring or enlarged thread in a softer plastics or possibly even rubber material.

In a further modification the bar or bars of additional material applied to the threaded member may be provided with a profile corresponding generally to that of the screw thread to which the material is applied to facilitate engagement of the threaded member with a threaded element.

The arrangement thus provides a self-sealing male plug thread in which extra material is moulded or cast onto a male thread at the same time that the male thread is formed or subsequently and the male threaded member can be driven into a female threaded socket which is parallel or tapered. By displacement or plasticitiy or extrusion of the material which is deformed or displaced by the female socket as it receives the male member, the material takes up any poor fitting sizes due to damaged material, tolerances or movement in specification to provide the sealed threaded joint between the member and sockets.

## Claims

1. A threaded member for engaging with a corresponding threaded element in which the threaded member has supplemental material on a portion or portions of the thread so as not to project significantly above the outer periphery of the thread to allow the threaded member to be engaged with a correspondingly threaded element, engagement of the thread deforming or distorting the supplemental material to fill any void between the threads of the member and element and thereby form a seal between the threads.

2. A threaded member as claimed in Claim 1, wherein the threaded member is formed as a moulding and the supplemental material is moulded onto the threaded member simultaneously therewith or in a subsequent moulding operation.

3. A threaded member as claimed in Claim 1 or Claim 2, wherein the supplemental material is the same as that of the plug.

4. A threaded member as claimed in Claim 1 or Claim 2, wherein the threaded member is formed in a relatively hard material and the supplemental material is relatively soft to allow the material to deform or distort when the threaded member is engaged with said threaded element.

5. A threaded member as claimed in Claim 4, wherein the member is formed in a relative hard plastics material and the supplemental material is a relatively soft rubber like or plastics material.

6. A threaded member as claimed in any of the preceding claims wherein the supplemental material comprises plurality of bars of material formed on the threaded member at the spaced locations around the member each bar bridging a plurality of threads.

7. A threaded member as claimed in any of Claims 1 to 4, wherein the supplemental material comprises a ring of material formed around a portion of the thread member.

8. A threaded member as claimed in any of Claims 1 to 4, wherein the thread of the threaded member is enlarged over at least one turn of the thread to create said supplemental material.

9. A threaded member as claimed in any of the preceding claims, wherein the supplemental material is spaced part way along the thread away from both ends of the thread.

10. A threaded member as claimed in any of the preceding claims, wherein the member is a male threaded member intended to engage a female threaded element.

11. A threaded member as claimed in Claim 10, wherein the threaded member is a threaded plug to engage in a screw threaded socket.

FIG. 1.

## FIG. 2.

FIG. 3.

FIG. 4.

European Patent Office

**EUROPEAN SEARCH REPORT**

Application Number

EP 91 30 2381

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 027 042 (GRAVES) <br> * Claims 1-2,4; figure 2; column 1, lines 62-64 * | 1,2,3,6 | F 16 L 15/04 <br> F 16 B 39/34 |
| Y | | 11 | |
| X | US-A-3 263 726 (McKAY) <br> * Claim 1; figures 1-8 * | 1,4,10 | |
| Y | | 2,5,7-9 ,11 | |
| Y | US-A-3 366 504 (HULTERSTRUM) <br> * Claim 1; figure 1 * | 2,5 | |
| Y | GB-A-1 218 644 (AMERACE ESNA CORP.) <br> * Claims 1,10; figure 4; page 4, lines 22-26,39 * | 7-9 | |

TECHNICAL FIELDS SEARCHED (Int. Cl.5)

F 16 L
F 16 B

The present search report has been drawn up for all claims

| Place of search | Date of completion of the search | Examiner |
|---|---|---|
| THE HAGUE | 15-05-1991 | BUDTZ-OLSEN A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)